(19) Europäisches Patentamt
European Patent Office
Office européen des brevets

(11) EP 0 553 402 B1

(12) **EUROPÄISCHE PATENTSCHRIFT**

(45) Veröffentlichungstag und Bekanntmachung des Hinweises auf die Patenterteilung:
**18.06.1997 Patentblatt 1997/25**

(51) Int Cl.⁶: **G07D 7/00**, G06K 9/52

(21) Anmeldenummer: **92118048.5**

(22) Anmeldetag: **22.10.1992**

(54) **Einrichtung zur Klassifizierung eines Musters, insbesondere von einer Banknote oder von einer Münze**

Device for the classification of a pattern, in particular of a currency note or a coin

Dispositif pour la classification d'un dessin, en particulier d'un billet de banque ou d'une pièce de monnaie

(84) Benannte Vertragsstaaten:
**CH DE GB IT LI**

(30) Priorität: **31.01.1992 CH 288/92**

(43) Veröffentlichungstag der Anmeldung:
**04.08.1993 Patentblatt 1993/31**

(73) Patentinhaber: **MARS INCORPORATED**
**McLean Virginia 22101-3885 (US)**

(72) Erfinder: **Seitz, Christian**
**CH-6300 Zug (CH)**

(74) Vertreter: **Burke, Steven David et al**
**R.G.C. Jenkins & Co.**
**26 Caxton Street**
**London SW1H 0RJ (GB)**

(56) Entgegenhaltungen:
| | |
|---|---|
| **EP-A- 0 101 276** | **EP-A- 0 253 935** |
| **EP-A- 0 294 497** | **DE-A- 3 345 251** |
| **FR-A- 2 370 327** | **US-A- 3 638 188** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf eine Einrichtung zur Klassifizierung eines Musters eines geldwerten Gegenstands, insbesondere von einer Banknote oder von einer Münze, der im Oberbegriff des Anspruchs 1 genannten Art.

Solche Einrichtungen und Verfahren werden vorteilhaft in Verkaufsautomaten, Geldwechselautomaten und dergleichen mehr verwendet, wo einerseits nach dem Wert, beispielsweise zwischen Ein-, Zwei- und Fünf-Dollar-Noten, und anderseits zwischen Originalen und Kopien klassifiziert wird.

Es ist ein Verfahren dieser Art bekannt (EP 0 204 574 A2), bei dem Unterschiede der magnetischen Feldstärken zwischen verschiedenen Bereichen eines Prüflings, der magnetisches Material - beispielsweise magnetische Tinte - enthält, mit Referenzwerten verglichen werden, um beispielsweise eine echte Ein-Dollar-Note von einer Kopie zu unterscheiden.

Es ist auch bekannt, (ggf. gewichtete) Intensitätswerte einer von Bildpartien eines Prüflings reflektierten elektromagnetischen Strahlung so aufzubereiten, dass der Prüfling mit einer Pixelmatrix eines Originals verglichen werden kann (EP-B1-0 067 898, EP-A2-0 253 935), oder dass Unterschiede zu einem Original in Form eines Winkels zwischen zwei n-dimensionalen Vektoren (DE 30 40 963 A1) oder als Kreuz-Korrelationsfunktion (EP 0 084 137 A2) ausgedrückt und ausgewertet werden.

Der Erfindung liegt die Aufgabe zugrunde, eine Einrichtung der im Oberbegriff des Anspruchs 1 genannten Art so aufzubauen, dass ein Muster kostengünstig innerhalb von Bruchteilen einer Sekunde klassifiziert werden kann.

Die Erfindung ist im Anspruch 1 gekennzeichnet. Weiterbildungen der Erfindung ergeben sich aus den abhängigen Ansprüchen.

Nachfolgend wird ein Ausführungsbeispiel der Erfindung anhand der Zeichnung näher erläutert.

Es zeigen:

Fig. 1    ein Blockschaltbild eines Einrichtung zur Klassifizierung eines Musters,

Fig. 2    ein Blockschaltbild eines Klassifizierungssystems für Banknoten,

Fig. 3    ein Blockschaltbild eines Klassifikators,

Fig. 4    die angestrebte Häufigkeitsverteilung der Trennwerte zweier Klassen, welche ein Klassifikator trennt, und

Fig. 5    ein Ablauf-Diagramm einer Lernmethode, mit welcher der Merkmalvektor und die Gewichte eines Klassifikators bestimmt werden.

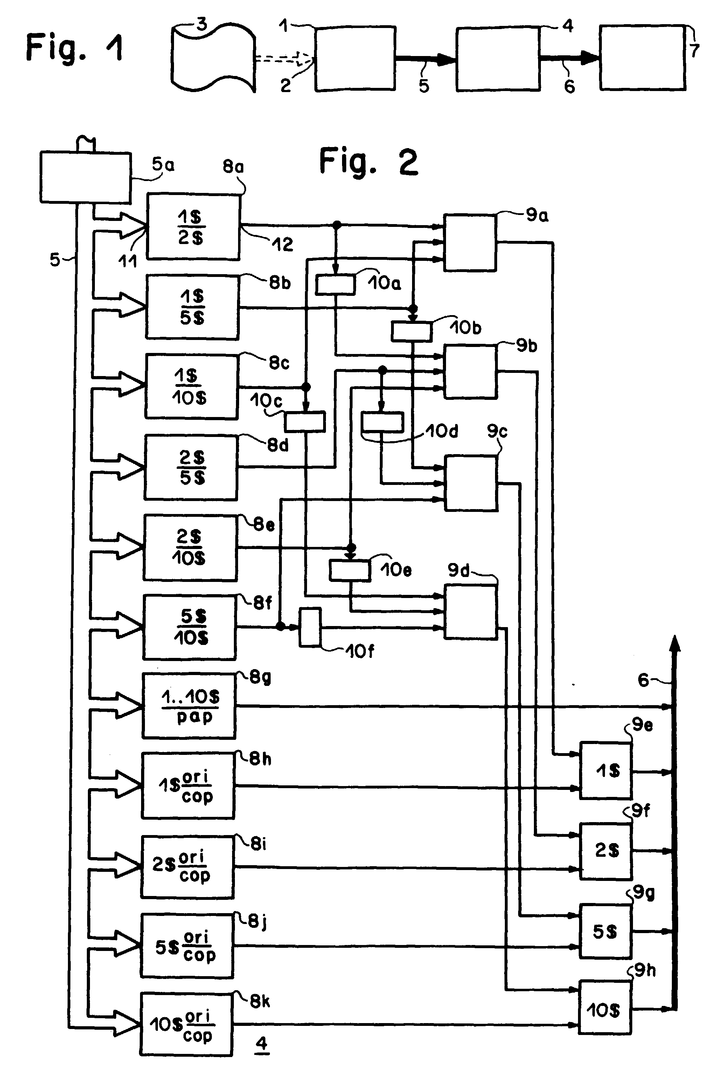

In der Fig. 1 bedeutet 1 ein Aufnahmesystem, welches im wesentlichen einen Einlass 2 und ein nicht gezeichnetes Transportsystem für einen Prüfling 3 sowie ein ebenfalls nicht gezeichnetes Sensorsystem aufweist, mit dem ein Muster des Prüflings gemessen wird. Ein Klassifizierungssystem 4 ist über einen Eingangsdatenbus 5 mit dem Aufnahmesystem 1 und über einen Ausgangsdatenbus 6 mit einem Dienstleistungssystem 7 verbunden.

Die Fig. 2 zeigt das Klassifizierungssystem 4, welches in diesem Fall für Ein-, Zwei-, Fünf- und Zehn-Dollar-Noten sowie für deren Kopien ausgelegt ist und welches mehrere Klassifikatoren 8, mehrere Auswertungsglieder 9 mit mindestens je zwei Eingängen und einem Ausgang sowie auch Sperrglieder 10 aufweist. Jeder der Klassifikatoren 8 hat einen aus mehreren Leitungen bestehenden Merkmaleingang 11, der mit dem Eingangsdatenbus 5 verbunden ist, sowie einen Klassifizierungsausgang 12.

Ein erster Klassifikator 8a, welcher Ein-Dollar-Noten gegenüber Zwei-Dollar-Noten abgrenzt, ist ausgangsseitig mit einem ersten Eingang eines ersten Auswertungsgliedes 9a und über ein erstes Sperrglied 10a mit einem ersten Eingang eines zweiten Auswertungsgliedes 9b verbunden.

Ein zweiter Klassifikator 8b, welcher Ein-Dollar-Noten gegenüber Fünf-Dollar-Noten abgrenzt, ist ausgangsseitig mit einem zweiten Eingang des ersten Auswertungsgliedes 9a und über ein zweites Sperrglied 10b mit einem ersten Eingang eines dritten Auswertungsgliedes 9c verbunden.

Ein dritter Klassifikator 8c, welcher Ein-Dollar-Noten gegenüber Zehn-Dollar-Noten abgrenzt, ist ausgangsseitig mit einem dritten Eingang des ersten Auswertungsgliedes 9a und über ein drittes Sperrglied 10c mit einem ersten Eingang eines vierten Auswertungsgliedes 9d verbunden.

Ein vierter Klassifikator 8d, welcher Zwei-Dollar-Noten gegenüber Fünf-Dollar-Noten abgrenzt, ist ausgangsseitig mit einem zweiten Eingang des zweiten Auswertungsgliedes 9b und über ein viertes Sperrglied 10d mit einem zweiten Eingang des dritten Auswertungsgliedes 9c verbunden.

Ein fünfter Klassifikator 8e, welcher Zwei-Dollar-Noten gegenüber Zehn-Dollar-Noten abgrenzt, ist ausgangsseitig mit einem dritten Eingang des zweiten Auswertungsgliedes 9b und über ein fünftes Sperrglied 10e mit einem zweiten Eingang des vierten Auswertungsgliedes 9d verbunden.

Ein sechster Klassifikator 8f, welcher Fünf-Dollar-Noten gegenüber Zehn-Dollar-Noten abgrenzt, ist ausgangsseitig mit einem dritten Eingang des dritten Auswertungsgliedes 9c und über ein sechstes Sperrglied 10f mit einem dritten Eingang des vierten Auswertungsgliedes 9d verbunden.

Der Klassifizierungsausgang 12 eines siebten Klassifikators 8g, der Ein-, Zwei-, Fünf- und Zehn-Dollar-Noten gegenüber anderen Papieren abgrenzt, führt auf den Ausgangsdatenbus 6.

Der Klassifizierungsausgang 12 eines achten Klassifikators 8h, welcher echte Ein-Dollar-Noten von dessen Kopien abgrenzt, führt auf einen ersten Eingang eines fünften Auswertungsgliedes 9e, welches einen zweiten, mit dem Ausgang des ersten Auswertungsgliedes 9a verbundenen Eingang aufweist, und welches ausgangsseitig mit dem Ausgangsdatenbus 6 verbunden ist.

Der Klassifizierungsausgang 12 eines neunten Klassifikators 8i, welcher echte Zwei-Dollar-Noten von dessen Kopien abgrenzt, führt auf einen ersten Eingang eines sechsten Auswertungsgliedes 9f, welches einen zweiten, mit dem Ausgang des zweiten Auswertungsgliedes 9b verbundenen Eingang aufweist, und welches ausgangsseitig mit dem Ausgangsdatenbus 6 verbunden ist.

Der Klassifizierungsausgang 12 eines zehnten Klassifikators 8j, welcher echte Fünf-Dollar-Noten von dessen Kopien abgrenzt, führt auf einen ersten Eingang eines siebten Auswertungsgliedes 9g, welches einen zweiten, mit dem Ausgang des dritten Auswertungsgliedes 9c verbundenen Eingang aufweist, und welches ausgangsseitig mit dem Ausgangsdatenbus 6 verbunden ist.

Der Klassifizierungsausgang 12 eines elften Klassifikators 8k, welcher echte Zehn-Dollar-Noten von dessen Kopien abgrenzt, führt auf einen ersten Eingang eines achten Auswertungsgliedes 9h, welches einen zweiten, mit dem Ausgang des vierten Auswertungsgliedes 9d verbundenen Eingang aufweist, und welches ausgangsseitig mit dem Ausgangsdatenbus 6 verbunden ist.

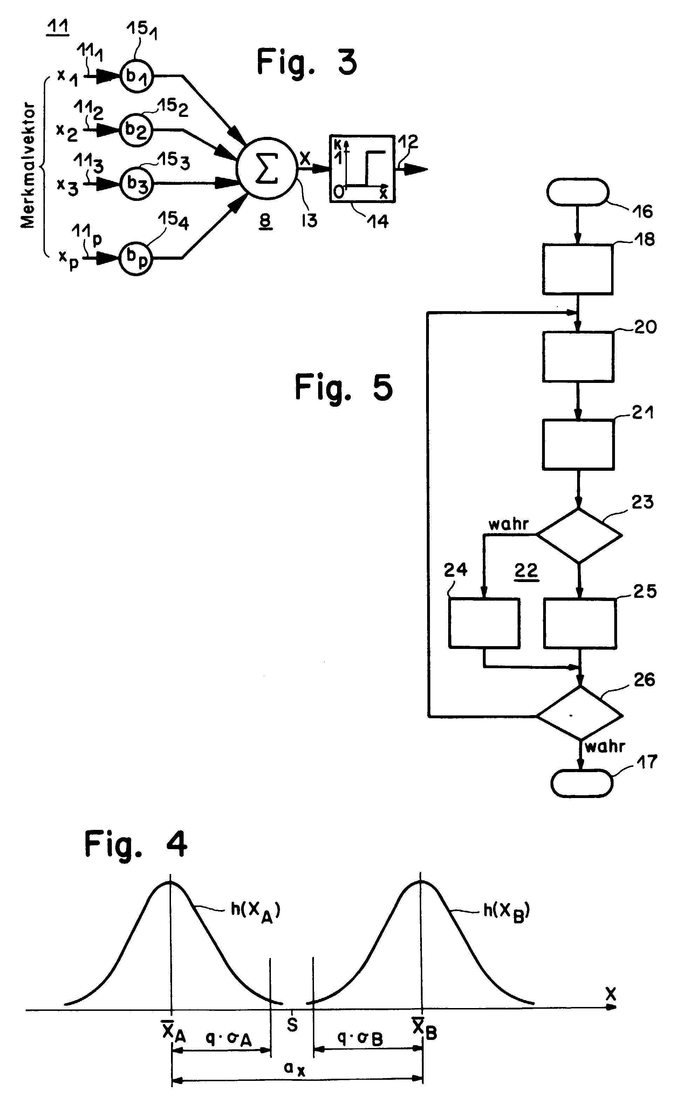

Die Fig. 3 zeigt ein Blockschaltbild des Klassifikators 8, der ein Summierelement 13 mit mehreren Eingängen, ein dem Summierelement 13 nachgeschaltetes Schwellenelement 14 und mehrere ausgangsseitig je mit einem Eingang des Summierelements 13 verbundene Multiplizierelemente 15 aufweist, die eingangsseitig je an eine der Leitungen des Merkmaleingangs 11 angeschlossen sind. Der Klassifizierungsausgang 12 ist der Ausgang des Schwellenelements 14.

Der Prüfling 3 - im Beispiel eine Banknote mit magnetischer Tinte - wird am Einlass 2 (Fig. 1) dem Transportsystem übergeben, das den Prüfling 3 am Sensorsystem vorbeiführt, welches das Muster des Prüflings 3 misst. Als Muster gelten die Werte einer Reihe von physikalischen Merkmalen des Prüflings. Im Beispiel besteht das Muster aus den 500 Werten der magnetischen Feldstärke, die durch mindestens einen Magnetfeld-Sensor an 500 verschiedenen, über die Länge des Prüflings verteilten Orten gemessen wird.

Vorteilhaft sind zwei in Reihe geschaltete Magnetfeld-Sensoren symmetrisch zur Mittellinie in Längsrichtung der Banknote derart nebeneinander angeordnet, dass jeweils gleichzeitig zwei Werte der magnetischen Feldstärke auf zwei verschiedenen, parallelen Spuren in der Längsrichtung der Banknote als Summe beider Werte gleichzeitig erfasst werden, damit für eine bestimmte Banknote nur zwei verschiedene Reihen Merkmale gemessen werden können, obwohl die Banknote in Längsrichtung auf vier verschiedene Arten dem Einlass 2 übergeben werden kann. In Längsrichtung sind die Messpunkte mit Vorteil äquidistant, so dass sich die beiden möglichen Reihen nur durch die umgekehrte Reihenfolge der Werte unterscheiden.

Es ist auch möglich, dass das Muster aus Intensitätswerten einer von Bildpartien des Prüflings reflektierten elektromagnetischen Strahlung besteht. Falls der Prüfling eine Münze ist, kann das Muster auch aus den Schallpegeln ausgesuchter Frequenzen des Klangspektrums gebildet sein, welches sich bei einem Aufprall des Prüflings ergibt.

Im Aufnahmesystem 1 können die Werte der Merkmale normiert oder quantisiert, gespeichert und je nach Muster auch gefiltert werden.

Die Werte der Merkmale eines Prüflings werden vorzugsweise in analoger Form über den Eingangsdatenbus 5 dem Klassifizierungssystem 4 übergeben. Der Eingangsdatenbus 5 weist mit Vorteil für jedes Merkmal eine eigene Leitung auf, so dass im Klassifizierungssystem 4 die Werte aller Merkmale gleichzeitig verfügbar sind. Es ist aber auch möglich, den Eingangsdatenbus 5 entsprechend mit weniger Leitungen auszulegen, wenn die Werte im Aufnahmesystem 1 gespeichert sind und wenn das Aufnahmesystem 1 einen Multiplexer enthält, der die Werte in bekannter Art gruppenweise auf den Eingangsdatenbus 5 leitet oder wenn die Werte vom Klassifizierungssystem 4 gruppenweise über den Eingangsdatenbus 5 abgerufen werden.

Da der Prüfling dem Einlass 2 auf verschiedene Arten übergeben werden kann und dadurch die gemessenen Merkmale in zwei verschiedenen Reihenfolgen anfallen können, enthält der Datenbus 5 vorzugsweise ein Umschaltelement 5a, welches den vom Klassifizierungssystem 4 vorausgesetzten Zuordnungssinn der Merkmale zu den Leitungen erkennt und die Merkmale oder die Leitungen gegebenenfalls derart paarweise vertauscht, dass der Zuordnungssinn genau umgekehrt wird.

Jeder der Klassifikatoren 8 (Fig. 2) grenzt aufgrund eines am Merkmaleingang 11 anliegenden Merkmalvektors den Prüfling zwischen zwei möglichen Klassen ab. Der Merkmalvektor enthält eine Untermenge der Reihe der gemessenen Merkmale und ist prinzipiell bei jedem der Klassifikatoren 8 aus anderen Merkmalen zusammengesetzt. Die Zusammensetzung des Merkmalvektors sowie weitere Klassifikationsparameter für jeden der Klassifikatoren 8 werden in einer Vorbereitungsphase ermittelt; die Klassifikatoren 8 sind vorteilhaft kundenspezifische Bausteine, sogenannte ASICs.

Aus den Ausgangssignalen der Klassifikatoren 8 erzeugen Auswertungsglieder 9 mit Hilfe der Sperrglieder 10 am Ausgangsdatenbus 6 verfügbare Entscheidungsdaten, welche diejenige Klasse darstellen, der das Muster des Prüflings zugeordnet wird. Aufgrund der Entscheidungsdaten werden im Dienstleistungssystem 7 Dienstleistungen ausgelöst.

Ein Ausgangssignal am Klassifizierungsausgang 12 jedes Klassifikators 8 ist mit Vorteil binär "0" oder "1"; dadurch sind die Sperrglieder 10 durch binäre Inverter und die Auswertungsglieder 9 durch UND-Gatter realisierbar. Selbstverständlich sind die Booleschen Funktionen, die im Klassifizierungssystem 4 durch Kombinationen der Sperrglieder 10 und der Auswertungsglieder 9 vorliegen, auch durch andere Gatter, beispielsweise durch NOR- oder durch NAND-Gatter realisierbar.

Im folgenden wird die Wirkungsweise des Klassifizierungssystems 4 anhand von Prüffällen beschrieben.

Wenn der Prüfling in einem ersten Fall eine Ein-Dollar-Note ist, weist der erste Klassifikator 8a sowie der zweite Klassifikator 8b und auch der dritte Klassifikator 8c das Ausgangssignal "1" auf, was am Ausgang des ersten Auswertungsgliedes 9a den Wert "1" ergibt. Das erste Sperrglied 10a, dessen Wert am Ausgang infolgedessen "0" ist, bewirkt bekannterweise am Ausgang des zweiten Auswertungsgliedes 9b den Wert "0" was am Ausgang des sechsten Auswertungsgliedes 9f ebenfalls zum Wert "0" führt, welches besagt, dass der Prüfling keine Zwei-Dollar-Note ist. Im weiteren bewirkt das zweite Sperrglied 10b bzw. das dritte Sperrglied 10c den Wert "0" am Ausgang des dritten Auswertungsgliedes 9c bzw. des vierten Auswertungsgliedes 9d und damit auch den Wert "0" am Ausgang des siebten Auswertungsgliedes 9g bzw. des achten Auswertungsgliedes 9h, welches bedeutet, dass der Prüfling keine Fünf-Dollar-Note bzw. auch keine Zehn-Dollar-Note ist. Der Wert am Klassifizierungsausgang 12 des siebten Klassifikators 8g ist "1" und bedeutet, dass der Prüfling eine Ein-, Zwei-, Fünf- oder Zehn-Dollar-Note und nicht nur ein Papier ist. Der achte Klassifikator 8h grenzt eine echte Ein-Dollar-Note von dessen Kopien ab und signalisiert mit dem Wert "1" an seinem Klassifizierungsausgang 12 den echten Prüfling. Folglich ergibt sich am Ausgang des Auswertungsgliedes 9e bei einem echten Prüfling der Wert "1" bzw. bei einer Kopie der Wert "0".

Ist der Prüfling in einem zweiten Fall eine Zwei-Dollar-Note, hat der Klassifizierungsausgang 12 des ersten Klassifikators 8a den Wert "0", was am Ausgang des ersten Auswertungsgliedes 9a den Wert "0" ergibt, woraus sich am Ausgang des fünften Auswertungsgliedes 9e ebenfalls der Wert "0" einstellt, der anzeigt, dass der Prüfling keine Ein-Dollar-Note ist. Der vierte bzw. der fünfte Klassifikator 8d bzw. 8e weist an seinem Klassifizierungsausgang 12 den Wert "1" auf, wodurch das vierte bzw. das fünfte Sperrglied 10d bzw. 10e, dessen Ausgang infolgedessen "0" ist, was am Ausgang des dritten bzw. des vierten Auswertungsgliedes 9c bzw. 9d den Wert "0" bewirkt und damit am Ausgang des siebten bzw. des achten Auswertungsgliedes 9g bzw. 9h ebenfalls zum Wert "0" führt, welches besagt, dass der Prüfling keine Fünf-Dollar-Note bzw. keine Zehn-Dollar-Note ist. Im weiteren bewirkt der Wert "0" am Klassifizierungsausgang 12 des ersten Klassifikators 8a am Ausgang des ersten Sperrgliedes 10a den Wert "1", womit alle drei Eingänge des zweiten Auswertungsgliedes den Wert "1" aufweisen. Der Wert am Klassifizierungsausgang 12 des siebten Klassifikators 8g ist "1" und bedeutet, dass der Prüfling eine Ein-, Zwei-, Fünf- oder Zehn-Dollar-Note und nicht nur ein Papier ist. Der neunte Klassifikator 8i grenzt eine echte Zwei-Dollar-Note von dessen Kopien ab und signalisiert mit dem Wert "1" an seinem Klassifizierungsausgang 12 den echten Prüfling. Folglich ergibt sich am Ausgang des sechsten Auswertungsgliedes 9f bei einem echten Prüfling der Wert "1" bzw. bei einer Kopie der Wert "0".

Im weiteren ist mit Hilfe von Fig. 2 leicht nachvollziehbar, dass bei einer echten Fünf-Dollar-Note der Klassifizierungsausgang des siebten Klassifikators 8g sowie der Ausgang des siebten Auswertungsgliedes 9g je den Wert "1" aufweisen und dass der Wert "1" am Klassifizierungsausgang 12 des siebten Klassifikators 8g zusammen mit einem Wert "1" am Ausgang des achten Auswertungsgliedes 9h eine echte Zehn-Dollar-Note signalisiert.

Da sich Originale und ihre Kopien sehr ähnlich sind, werden vorzugsweise einerseits durch eine erste Gruppe von Klassifikatoren 8 der Notenwert klassifiziert und anderseits durch eine zweite Gruppe von Klassifikatoren 8 die Originale von ihren Kopien getrennt. Jeder Notenwert wird durch je einen Klassifikator 8 von einem andern Notenwert getrennt. Bei vier verschiedenen Notenwerten ergeben sich die sechs Kombinationen ohne Wiederholung der Länge zwei von vier Elementen und damit die erste Gruppe aus den sechs Klassifikatoren 8a, 8b, 8c, 8d, 8e und 8f. Die zweite Gruppe weist für jeden Notenwert einen entsprechenden Klassifikator 8h, 8i, 8j oder 8k auf. Zusätzlich wird der Klassifikator 8g eingesetzt, um Banknoten der betrachteten Werte - hier 1$, 2$, 5$ und 10$ - von anderen Papieren zu unterscheiden.

Es sind auch andere, hier nicht gezeichnete Schaltungsvarianten mit Klassifikatoren 8 möglich. Beispielsweise kann jede Klasse von jeder anderen Klasse durch je einen Klassifikator 8 abgegrenzt werden. Eine solche Anordnung würde zum Trennen von vier Notenwertklassen und ihrer vier Kopienklassen die achtundzwanzig Kombinationen ohne Wiederholung der Länge zwei von acht Elementen ergeben und damit achtundzwanzig Klassifikatoren 8 erfordern.

Die Klassifikatoren 8 arbeiten prinzipiell je mit einer linearen Trennformel, nach welcher der Trennwert aus dem an ihrem Merkmaleingang 11 anliegenden Merkmalvektor berechnet wird, wobei die Trennformel und der Merkmalvektor für jeden einzelnen der Klassifikatoren 8 optimal aufgebaut sind und damit eine sichere Trennung ermöglichen.

Nachfolgend wird ein Verfahren, mit dem die optimale Trennformel für jeden der Klassifikatoren 8 gefunden wird, beschrieben.

Es ist bekannt (H. Niemann: Klassifikation von Mustern - Berlin, Heidelberg, Berlin, Tokyo: Springer 1983), Muster aufgrund der Summe mehrerer linear gewichteter Merkmale zu klassifizieren.

$$X = \sum_{i=1}^{m} b_i \cdot x_i \qquad \qquad (G1)$$

Die Gleichung (G1) ist die Trennformel, wobei m die Anzahl Merkmale, $x_i$ ein mit einem Messwert behaftetes Merkmal des zu klassifizierenden Musters und $b_i$ ein Gewicht genannter Faktor ist, der zu $x_i$ gehört. Der Trennwert X grenzt jede Klasse des Musters gegen andere Klassen ab.

Sind mehrere Klassen von Mustern zu trennen und sind die zu klassifizierenden Muster untereinander sehr ähnlich, dann ist es möglich, dass keine lineare Trennformel gefunden werden kann, mit der alle Klassen mit vertretbarem Aufwand sicher voneinander trennbar sind.

Mit Vorteil wird die Trennformel (G1) zur Trennung von jeweils genau zwei Klassen angewendet; dazu werden mit Hilfe eines Prozessrechners in der Vorbereitungsphase aus einer Vielzahl von verfügbaren Merkmalen diejenigen Merkmale ausgesucht, die nicht korrelieren und die bei optimaler Gewichtung wesentlich zur Trennung dieser beiden Klassen beitragen.

In der Vorbereitungsphase werden für jeden der Klassifikatoren 8 unter Berücksichtigung der Streuung innerhalb jeder der beiden zu trennenden Klassen der Merkmalvektor und die Gewichte bestimmt.

Als Datenbasis stehen die gemessenen Reihen der Merkmale von genügend vielen - beispielsweise einhundert - Proben für jede der Klassen bereit; unter ihnen sind nA Reihen der m Merkmale für eine erste Klasse A und nB Reihen der m Merkmale für eine zweite Klasse B. Die Anzahl nA der Proben der Klasse A kann verschieden von der Anzahl nB der Proben der Klasse B sein.

Vorzugsweise werden die Proben mit Hilfe des Aufnahmesystems 1 gemessen, damit alle real auftretenden Störungen, wie beispielsweise Geschwindigkeitsschwankungen des Transportsystems, in die Streuung der Messwerte einfliessen.

Die Klasse A bedeutet beispielsweise echte Ein-Dollar-Noten und die Klasse B Kopien von Ein-Dollar-Noten.

Die Reihen der Messwerte der Klassen A und B sind mit Vorteil in zwei Matrizen organisiert. Eine erste Matrix $\underline{X}_A$ für die Klasse A hat m Zeilen und nA Spalten während eine zweite Matrix $\underline{X}_B$ für die Klasse B m Zeilen und nB Spalten aufweist.

Die einzelnen Messwerte der Klasse A sind somit die Elemente $x_{ijA}$ der Matrix $\underline{X}_A$:

$$x_{ijA} \; ; \; i = 1 .. m \; ; \; j = 1 .. nA \; ; \qquad \qquad (G2)$$

und die einzelnen Messwerte der Klasse B Elemente $x_{ijB}$ der Matrix $\underline{X}_B$:

$$x_{ijB} \; ; \; i = 1 .. m \; ; \; j = 1 .. nB . \qquad \qquad (G3)$$

Aus der Datenbasis werden im folgenden weitere Grössen berechnet.

Die Mittelwerte $\bar{x}_{iA}$ bzw. $\bar{x}_{iB}$ der Messwerte der einzelnen Merkmale i der Klasse A bzw. der Klasse B:

$$\bar{x}_{iA} = \frac{1}{n_A} \sum_{j=1}^{n_A} x_{ijA} \qquad \qquad (G4a)$$

$$\bar{x}_{iB} = \frac{1}{n_B} \sum_{j=1}^{n_B} x_{ijB} \qquad (G4b)$$

Die Differenzen $a_i$ dieser Mittelwerte zwischen der Gruppe A und der Gruppe B:

$$a_i = \bar{x}_{iA} - \bar{x}_{iB} \; ; \; i=1..m \qquad (G5)$$

Die Trenngrössen $X_{jA}$ und $X_{jB}$ der j-ten Probe der beiden Klassen aus den Matrizen $\underline{X}_A$ bzw. $\underline{X}_B$:

$$X_{jA} = \sum_{i=1}^{m} b_i \cdot x_{ijA} \qquad (G6a)$$

$$X_{jB} = \sum_{i=1}^{m} b_i \cdot x_{ijB} \qquad (G6a)$$

Die Mittelwerte $\bar{X}_A$ und $\bar{X}_B$ der Trenngrössen beider Gruppen:

$$\bar{X}_A = \frac{1}{n_A} \sum_{j=1}^{n_A} X_{jA} = \frac{1}{n_A} \sum_{j=1}^{n_A} \sum_{i=1}^{m} b_i \cdot x_{ijA} \qquad (G7a)$$

$$\bar{X}_B = \frac{1}{n_A} \sum_{j=1}^{n_B} X_{jB} = \frac{1}{n_B} \sum_{j=1}^{n_B} \sum_{i=1}^{m} b_i \cdot x_{ijB} \qquad (G7b)$$

Die Differenz $a_x$ der Mittelwerte $\bar{X}_A$ und $\bar{X}_B$ der Trenngrössen:

$$a_x = \bar{X}_A - \bar{X}_B \qquad (G8)$$

Aus (G8), (G5), (G7a) und (G7b) folgt weiter:

$$a_x = \sum_{i=1}^{m} b_i \cdot a_i \qquad (G9)$$

Die Summe T der Quadrate der Abweichungen der Trenngrössen der Proben von ihren Mittelwerten der Trenngrössen innerhalb der beiden Klassen:

$$T = \sum_{j=1}^{n_A} ( X_{jA} - \bar{X}_A )^2 + \sum_{j=1}^{n_B} ( X_{jB} - \bar{X}_B )^2 \qquad (G10)$$

Die Summe T entspricht der Summe der Quadrate der Streuungen der Trenngrössen $X_A$ und $X_B$.

Damit im folgenden die Ausdrücke handhabbar sind, werden nur drei Merkmale betrachtet. Es gilt also m=3, was jedoch keine Einschränkung der Allgemeinheit der Abhandlung bedeutet.

Die Gewichte $b_i$ - wobei i=1..m ist - werden so bestimmt, dass die Differenz $a_x$ der Mittelwerte der Trenngrössen der beiden Klassen in (G9) maximal und die Summe T der Quadrate der Streuungen der Trenngrössen der beiden Klassen in (G10) minimal wird. Dies ist beim Maximum von $a_x^2/T$ erfüllt. Infolgedessen werden die ersten Ableitungen von $a_x^2/T$ nach den Gewichten $b_i$ gesucht und gleich Null gesetzt:

$$\frac{d}{db_i} \left( \frac{a_x^2}{T} \right) = 0 \;;\; i=1..m \qquad (G11)$$

Wird die Quotientenregel für (G11) angewandt, ergibt sich:

$$\frac{1}{T^2} \left( T \frac{d\,a_x^2}{db_i} - a_x^2 \frac{dT}{db_i} \right) = 0 \qquad (G12)$$

und daraus:

$$\frac{1}{2} \frac{dT}{db_i} = \frac{T}{a_x} \frac{da_x}{db_i} \;;\; i=1..3 \qquad (G13)$$

Aus (G9) ist ersichtlich, dass

$$\frac{da_x}{db_i} = a_i \qquad (G14)$$

Werden in Gleichung (G10) unter Berücksichtigung von (G4a) und (G4b) die Gleichungen (G6a) und (G6b) eingesetzt, so folgt damit für drei Merkmale:

$$T = \sum_{j=1}^{n_A} [\ b_1(x_{1jA}-\overline{x}_{1A}) + b_2(x_{2jA}-\overline{x}_{2A}) + b_3(x_{3jA}-\overline{x}_{3A})\ ]^2 +$$

$$+ \sum_{j=1}^{n_B} [\ b_1(x_{1jB}-\overline{x}_{1B}) + b_2(x_{2jB}-\overline{x}_{2B}) + b_3(x_{3jB}-\overline{x}_{3B})\ ]^2 \quad (G15)$$

Davon die Ableitung:

$$\frac{dT}{db_1} = 2\cdot\{\sum_{j=1}^{n_A} [b_1(x_{1jA}-\overline{x}_{1A})+b_2(x_{2jA}-\overline{x}_{2A})+b_3(x_{3jA}-\overline{x}_{3A})]\cdot(x_{1jA}-\overline{x}_{1A})+$$

$$+ \sum_{j=1}^{n_B} [\ b_1(x_{1jB}-\overline{x}_{1B})+b_2(x_{2jB}-\overline{x}_{2B})+b_3(x_{3jB}-\overline{x}_{3B})]\cdot(x_{1jB}-\overline{x}_{1B})\}$$

Nach weiterer Umformung:

$$\frac{dT}{db_1} = 2\{b_1\cdot \sum_{j=1}^{n_A} (x_{1jA}-\overline{x}_{1A})^2 + b_2\cdot \sum_{j=1}^{n_A} (x_{1jA}-\overline{x}_{1A})(x_{2jA}-\overline{x}_{2A}) +$$

$$+ b_3\cdot \sum_{j=1}^{n_A} (x_{1jA}-\overline{x}_{1A})(x_{3jA}-\overline{x}_{3A}) + b_1\cdot \sum_{j=1}^{n_B} (x_{1jB}-\overline{x}_{1B})^2 +$$

$$+ b_2\cdot \sum_{j=1}^{n_B} (x_{1jB}-\overline{x}_{1B})(x_{2jB}-\overline{x}_{2B}) + b_3\cdot \sum_{j=1}^{n_B} (x_{1jB}-\overline{x}_{1B})(x_{3jB}-\overline{x}_{3B})\}$$

$$(G16)$$

Zwei Ausdrücke aus der Gleichung (G16) werden substituiert:

$$\sum_{j=1}^{n_A} (x_{1jA} - \bar{x}_{1A})^2 = (S_{11})_A \qquad (G17a)$$

$$\sum_{j=1}^{n_B} (x_{1jB} - \bar{x}_{1B})^2 = (S_{11})_B \qquad (G17b)$$

Der Ausdruck für $(S_{11})_A$ ist vergleichbar mit der empirischen Varianz $\sigma_{x11}^2$ der Messwerte des ersten Merkmals bei der Klasse A, die dargestellt ist mit:

$$\sigma_{x11}^2 = \frac{1}{n_A - 1} \cdot \sum_{j=1}^{n_A} (x_{1jB} - \bar{x}_{1B})^2$$

Aus den Gleichungen (G17a) und (G17b) wird die Summe der Quadrate der Streuungen des ersten Merkmals beider Klassen A und B gebildet und zu $S_{11}$ gesetzt:

$$S_{11} = (S_{11})_A + (S_{11})_B \qquad (G18)$$

In der Gleichung (G16) finden sich bei den Gewichten verschiedene Kreuzkorrelationskoeffizienten zwischen Merkmalen. So beispielsweise den Kreuzkorrelationskoeffizienten zwischen den Messwerten $x_{1jA}$ - für $j=1..n_A$ - und den Messwerten $x_{2jA}$ -für $j=1..n_A$ - das heisst, zwischen dem ersten und dem zweiten Merkmal der Gruppe A, also zwischen der ersten und der zweiten Zeile der Matrix $\underline{X}_A$; dieser Kreuzkorrelationskoeffizient wird zu $(S_{12})_A$ gesetzt:

$$\sum_{j=1}^{n_A} (x_{1jA} - \bar{x}_{1A})(x_{2jA} - \bar{x}_{2A}) = (S_{12})_A \qquad (G19a)$$

Ebenso findet sich in (G16) der Kreuzkorrelationskoeffizient zwischen den Messwerten $x_{1jB}$ - für $j=1..n_B$ - und den Messwerten $x_{2jB}$ - für $j=1..n_B$ - das heisst, zwischen dem ersten und dem zweiten Merkmal der Gruppe B, also zwischen der ersten und der zweiten Zeile der Matrix $\underline{X}_B$; dieser Kreuzkorrelationskoeffizient wird zu $(S_{12})_B$ gesetzt:

$$\sum_{j=1}^{n_B} (x_{1jB} - \bar{x}_{1B})(x_{2jB} - \bar{x}_{2B}) = (S_{12})_B \qquad (G19b)$$

Eine weitere Substitution mit (G19a) und (G19c) wird:

$$S_{12} = (S_{12})_A + (S_{12})_B \qquad (G20)$$

Nach der gleichen Methode wie $S_{12}$ wird $S_{13}$ aus (G16) gesetzt:

$$S_{13} = (S_{13})_A + (S_{13})_B \qquad \text{(G21)}$$

Die Gleichung (G16) wird mit den Gleichungen (G18), (G20) und (G21) zu:

$$dT/db_1 = 2( b_1 S_{11} + b_2 S_{12} + b_3 S_{13} ) \qquad \text{(G22)}$$

In der Gleichung (G13) für i=1 werden die Gleichungen (G22) und (G14) eingesetzt. Damit ergibt sich:

$$b_1 S_{11} + b_2 S_{12} + b_3 S_{13} = a_1 \cdot T/a_x \qquad \text{(G23)}$$

In analoger Weise wie $dT/db_1$ zur Gleichung (G16) entwickelt worden ist, wird $dT/db_2$ und $dT/db_3$ umgewandelt. Im weiteren werden nach der Methode, wie $S_{11}$ bzw. $S_{12}$ gesetzt worden sind, die Koeffizienten $S_{22}$, $S_{33}$ bzw. $S_{23}$ substituiert. Damit ergeben sich aus dem Gleichungssystem (G13) drei entwickelte Gleichungen:

$$b_1 S_{11} + b_2 S_{12} + b_3 S_{13} = a_1 \qquad \text{(G24a)}$$

$$b_1 S_{12} + b_2 S_{22} + b_3 S_{23} = a_2 \qquad \text{(G24b)}$$

$$b_1 S_{13} + b_2 S_{23} + b_3 S_{33} = a_3 \qquad \text{(G24c)}$$

Es versteht sich von selbst, dass für die Koeffizienten die Beziehungen $S_{12}=S_{21}$, $S_{13}=S_{31}$ und $S_{23}=S_{32}$ gelten.

In den Gleichungen (G24a..c) sind die Faktoren $T/a_x$ aus der Gleichung (G13) bzw. (G23) nicht mehr übernommen worden, was keine Auswirkung auf das wichtige Verhältnis $a_x^2/T$ hat, denn die Multiplikation aller Gewichte $b_1..b_m$ ändert den Wert von $a_x^2/T$ nicht; dies ist aus den Gleichungen (G9) und (G15) klar ersichtlich. Wichtig ist nur das Verhältnis der Gewichte $b_1..b_m$ zueinander, nicht aber ihr absoluter Betrag.

Mit den drei Gleichungen (G24a..c) lassen sich die drei unbekannten Gewichte $b_1$, $b_2$ und $b_3$ berechnen. Bei m Merkmalen ergeben sich m Gleichungen (G24) womit in der Vorbereitungsphase die m Gewichte $b_1..b_m$, welche die lineare Trennformel (G1) optimal bestimmen, berechenbar sind.

Überraschend einfach ist der Aufbau des Gleichungssystems (G24). Die Koeffizienten S der unbekannten Gewichte b sind direkt die Summen von Kreuzkorrelationskoeffizienten beider Klassen A und B zwischen je zwei Merkmalen. Die Indizes von jedem der Koeffizienten S bzw. die Indizes von den im Koeffizienten S berücksichtigten zwei Merkmalen entsprechen direkt der Position - Zeile, Spalte - der Koeffizienten S in dem nach den Indizes der Merkmale geordneten Gleichungssystem (G24).

Damit für jeden der Klassifikatoren 8 die beiden ihm zur Trennung zugeordneten Klassen A und B sicher trennbar sind, wird für jeden der Klassifikatoren 8 der Merkmalvektor derart bestimmt, dass die in den Gleichungen (G5) und (G9) beschriebene Differenz $a_x$ betragsmässig möglichst gross ist und die Streuungen $\sigma_A$ und $\sigma_B$ der Trenngrössen $X_A$ bzw. $X_B$ möglichst klein sind.

In der Fig. 4 sind eine Funktion $h(X_A)$ und eine weitere Funktion $h(X_B)$, die Mittelwerte $\overline{X}_A$ und $\overline{X}_B$, die Differenz $a_x$ sowie ein Schwellwert S in der Mitte zwischen den Mittelwerten $\overline{X}_A$ und $\overline{X}_B$ dargestellt. Die Funktion $h(X_A)$ stellt die relative Häufigkeit der Trennwerte $X_A$ der Klasse A dar während die Funktion $h(X_B)$ die relative Häufigkeit der Trennwerte $X_B$ der Klasse B ausdrückt. Um die Trennung der beiden Klassen A und B sicherzustellen, dürfen sich eine erste, von der Abszisse und der Häufigkeitsfunktion $h(X_A)$ im Bereich $\overline{X}_A \pm q \cdot \sigma_A$ eingeschlossene Fläche, und eine zweite Fläche, die von der Abzisse und der Häufigkeitsfunktion $h(X_A)$ im Bereich $\overline{X}_B \pm q \cdot \sigma_B$ eingeschlossen ist, praktisch nicht überlappen, so dass gilt:

$$|a_x| - q(\sigma_A + \sigma_B) \geq 0 \qquad \text{(G25)}$$

Je grösser der Faktor q ist, desto grösser ist die Sicherheit, mit welcher die beiden Klassen A und B getrennt werden. Mit Vorteil ist der Faktor q mindestens drei.

Die Quadrate der Streuungen $\sigma_{xA}{}^2$ der Klasse A und $\sigma_{xB}{}^2$ der Klasse B berechnen sich folgendermassen:

$$\sigma_{xA}{}^2 = \frac{1}{n_A - 1} \sum_{j=1}^{n_A} (X_{jA} - \overline{X_A})^2 \qquad (G26a)$$

$$\sigma_{xB}{}^2 = \frac{1}{n_B - 1} \sum_{j=1}^{n_B} (X_{jB} - \overline{X_B})^2 \qquad (G26b)$$

Die Fig. 5 zeigt ein Ablaufdiagramm einer in der Vorbereitungsphase eingesetzten Lernmethode, mit welcher der Merkmalvektor und die Gewichte für einen der Klassifikatoren 8 bestimmt wird und die für jeden der Klassifikatoren 8 angewendet wird. Die in der Lernmethode mit A bzw. B bezeichneten Klassen sind diejenigen beiden Klassen, die der betrachtete Klassifikator 8 trennt.

Die Lernmethode zwischen einem Anfang 16 und einem Ende 17 weist eine Initialisierungsphase 18 und eine Iterationsphase 19 auf, welche anschliessend an die Initialisierungsphase 18 folgt.

In der Initialisierungsphase 18 werden eine Anzahl p Startmerkmale aus den m verfügbaren Merkmalen ausgewählt und dem Merkmalvektor zugeordnet, wobei die Anzahl p vorteilhaft etwa zehn beträgt. Die Startmerkmale können willkürlich ausgewählt werden; es ist jedoch von Vorteil, diese nicht zufällig zu wählen, sondern für eine der beiden Klassen A oder B aus den gemessenen Reihen der Merkmale die Autokorrelationsfunktion zu bilden und bei deren Nullstellen Merkmale mit möglichst grossem Wert auszusuchen und als Startmerkmale zu verwenden.

Für den aktuellen Merkmalvektor werden die Gewichte $b_1..b_p$ berechnet, indem das Gleichungssystem (G24) für p unbekannte Gewichte aufgestellt und gelöst wird. Anschliessend werden die Differenz $a_x$ der Mittelwerte der Trenn-grössen nach den Gleichungen (G9) und (G5) sowie die Streuung $\sigma_A$ bzw. $\sigma_B$ nach der Gleichung (G26a) bzw. (G26b) berechnet, womit die Initialisierungsphase abgeschlossen ist.

In der Iterationsphase 19 folgt auf einen Suchschritt 20 ein Berechnungsblock 21 und darauf ein Selektionsblock 22.

Im Suchschritt 20 wird ein weiteres, neues Merkmal aus den verfügbaren Merkmalen ausgewählt und damit der Merkmalvektor erweitert und die Anzahl p um eins erhöht.

Im Berechnungsblock 21 werden für den aktuellen Merkmalvektor die Gewichte $b_1..b_p$ bestimmt, indem das Gleichungssystem (G24) für p unbekannte Gewichte aufgestellt und gelöst wird. Anschliessend werden ein neuer Wert $a_{x*}$ für die Differenz $a_x$ nach den Gleichungen (G9) und (G5) sowie neue Werte $\sigma_{A*}$ und $\sigma_{B*}$ für die Streuung $\sigma_A$ bzw. $\sigma_B$ nach der Gleichung (G26a) bzw. (G26b) berechnet.

Der Selektionsblock 22 weist zu Beginn eine erste Verzweigung 23 mit zwei möglichen Nachfolgern auf, wobei der eine Nachfolger ein Annahmeschritt 24 und der andere ein Rückgabeschritt 25 ist.

Bei der Verzweigung 23 wird festgestellt, ob das zuletzt ausgewählte Merkmal die beiden Klassen A und B besser trennt, und falls die Trennung verbessert ist, wird zum Annahmeschritt 24, und sonst zum Rückweisungsschritt 25 verzweigt. Die Trennung wird besser, wenn die Differenz $a_x$ der Mittelwerte der Trennwerte beider Klassen mehr zunimmt als die Streuung der Trennwerte, das heisst wenn folgender Boolescher Ausdruck wahr ist:

$$((|a_{x*}| - |a_x|) \geq k \cdot (\sigma_{A*} - \sigma_A)) \text{ UND } ((|a_{x*}| - |a_x|) \geq k \cdot (\sigma_{B*} - \sigma_B)),$$

wobei der Faktor k vorteilhaft etwa drei beträgt.

Im Annahmeschritt 24 werden der Wert der Differenz $a_x$ durch ihren neuen Wert $a_{x*}$ und die Werte der Streuungen $\sigma_A$ und $\sigma_B$ durch den entsprechenden neuen Wert $\sigma_{A*}$ bzw. $\sigma_{B*}$ ersetzt und damit aktualisiert, während im Rückweisungsschritt 25 das im letzten Suchschritt 20 ausgewählte Merkmal wieder aus dem Merkmalvektor entfernt und als zur Trennung ungeeignet markiert wird.

Anschliessend an den Selektionsblock 22 folgt eine zweite, bedingt zum Suchschritt 20 oder zum Ende 17 führende Verzweigung 26 mit einer Booleschen Schleifenbedingung, nach deren Auswertung die Lernmethode mit dem Suchschritt 20 weitergeführt oder abgeschlossen wird. Die Lernmethode wird abgeschlossen, wenn der Merkmalvektor

EP 0 553 402 B1

die beiden Klassen A und B genügend trennt. Je nach Anwendungsfall und erforderlicher Sicherheit wird die Schleifenbedingung auf der Basis der Ungleichung (G25) formuliert, so dass die Lernmethode mit dem Ende 17 abgeschlossen wird, wenn der erforderliche Abstand $a_x$ erreicht ist und andernfalls mit dem Suchschritt 20 weitergeführt wird. Die Schleifenbedingung lautet beispielsweise: $|a_x| \geq q(\sigma_A + \sigma_B)$ .

Der Merkmaleingang 11 jedes Klassifikators 8 weist für jedes der p Merkmale, die der Klassifikator 8 berücksichtigt, eine eigene Leitung $11_1..11_p$ (Fig. 3) sowie ein eigenes Multiplizierelement $15_1..15_p$ auf, welches den Wert des einzelnen Merkmals mit dem zugeordneten Gewicht $b_1..b_p$ multipliziert und damit gewichtet. Alle gewichteten Werte des Merkmalvektors werden im Summierelement 13 zum Trennwert X aufsummiert, der dem Schwellenelement 14 übergeben wird. Je nachdem, ob der Trennwert X grösser oder kleiner als der Schwellwert S ist, wird im Schwellenelement 14 das Ausgangssignal am Klassifizierungsausgang 12 beeinflusst. Beispielsweise wird das Ausgangssignal "1", wenn $X \geq S$ und "0", falls $X < S$. Mit Vorteil wird in der Vorbereitungsphase der Schwellwert S als arithmetisches Mittel der beiden Mittelwerte $\overline{X}_A$ und $\overline{X}_B$ der Trennwerte festgelegt.

Es ist auch möglich, dass das Schwellenelement 14 anstelle des binären Ausgangssignals ein mehrwertiges oder analoges Signal generiert. Dies hätte zur Folge, dass die Auswertungsglieder 9 und die Sperrglieder 10 nicht durch binäre Gatter verwirklichbar wären.

Das in der Fig. 2 dargestellte Klassifizierungssystem 4 mit den je genau zwei Klassen unterscheidenden Klassifikatoren 8, die zeitlich nebeneinander arbeiten können, löst die gestellte Aufgabe zuverlässig und auf einfache Weise.

Das Klassifizierungssystems 4 kann auch durch ein Programm verwirklicht werden, welches auf mindestens einem geeigneten Prozessor abläuft, wobei die in der Vorbereitungsphase gewonnenen Klassifikationsparameter beispielsweise in einer Tabelle in einem nur lesbaren Speicher - ROM - abgelegt sind.

**Patentansprüche**

1. Einrichtung mit einem Aufnahmesystem (1) und einem Klassifizierungssystem (4) zur Klassifizierung eines Musters eines geldwerten Gegenstands anhand der Werte einer Reihe von physikalischen Merkmalen, die vom Aufnahmesystem (1) geliefert werden, wobei das Klassifizierungssystem (4) über einen die Merkmale empfangenden Eingang (5) mit dem Aufnahmesystem (1) und über einen Ausgang (6) mit einem Dienstleistungssystem (7) verbunden ist, dadurch gekennzeichnet,

   daß im Klassifizierungssystem (4) mehrere Klassifikatoren (8) vorhanden sind, welche das Muster je zwischen zwei möglichen Klassen abgrenzen und die Abgrenzung je durch ein Ausgangssignal darstellen, das eine von zwei Ausgangsformen annehmen kann, die jeweils einer der Klassen zugeordnet sind;
   daß jeder der Klassifikatoren (8) aufgrund eines eigenen Merkmalvektors, dessen Komponenten aus der Reihe der Merkmale des Musters ausgesucht sind, klassifiziert, und
   daß im Klassifizierungssystem (4) eine Auswertungseinrichtung (9, 10) enthalten ist, die aus den Ausgangssignalen Entscheidungsdaten erzeugt, welche diejenige Klasse darstellen, der das Muster zugeordnet wird.

2. Einrichtung nach Anspruch 1, dadurch gekennzeichnet,
   daß jeder der Klassifikatoren (8) jede Komponente seines Merkmalvektors mit einem vorbestimmten und dem Merkmal zugeordneten Gewichtsfaktor multipliziert und die so entstandenen Produkte zu einer Trenngröße aufsummiert, anhand deren Wert er die Abgrenzung vornimmt und das Ausgangssignal generiert.

3. Einrichtung nach Anspruch 2, dadurch gekennzeichnet,

   daß jeder der Klassifikatoren (8) einen aus mehreren Leitungen bestehenden Merkmaleingang (11) und einen Klassifizierungsausgang (12) für ein Ausgangssignal aufweist,
   daß die Merkmaleingänge (11) der Klassifikatoren (8) mit dem Eingang (5) verbunden sind,
   daß die Auswertungseinrichtung Auswertungsglieder (9) mit Eingängen aufweist, die jeweils direkt oder über ein Sperrglied (10) mit Klassifizierungsausgängen (12) verbunden sind, und
   daß der Ausgang (6) der Auswertungseinrichtung mit Ausgängen von Verknüpfungsgliedern (9) verbunden ist.

4. Einrichtung nach Anspruch 1, dadurch gekennzeichnet,
   daß das Ausgangssignal der Klassifikatoren (8) binär ist.

5. Einrichtung nach Anspruch 1, dadurch gekennzeichnet,
   daß jeder der Klassifikatoren (8) ein Summierelement (13), ein dem Summierelement (13) nachgeschaltetes Schwellenelement (14) sowie mehrere ausgangsseitig je mit einem Eingang des Summierelements (13) verbundene Multiplizierelemente (15) aufweist, die eingangsseitig je an eine der Leitungen des Merkmaleingangs (11) angeschlossen sind, wobei das Schwellenelement (14) am Klassifizierungsausgang (12) liegt.

**6.** Einrichtung nach Anspruch 3, dadurch gekennzeichnet,
daß die Auswertungsglieder (9) binäre UND-Gatter und die Sperrglieder (10) binäre Inverter sind.

**7.** Einrichtung nach Anspruch 2, dadurch gekennzeichnet,

daß aus Meßwerten einer aussagekräftigen Anzahl von Mustern aus jeder Klasse für jeden Klassifikator (8) der Merkmalvektor derart ausgewählt und für jedes Merkmal des Merkmalvektors der Gewichtsfaktor so berechnet wird,
daß sich die maximale Differenz ($a_x$) zwischen den beiden Mittelwerten der Trenngrößen für die beiden vom Klassifikator (8) abzugrenzenden Klassen und die minimale Streuung der Trenngröße für jede der beiden Klassen ergibt.

**8.** Einrichtung nach Anspruch 4, dadurch gekennzeichnet, daß die Auswertungseinrichtung logische Gatter (9, 10) zur Durchführung Boolescher Funktionen aufweist.

**9.** Einrichtung nach Anspruch 1, dadurch gekennzeichnet, daß die Auswertungseinrichtung (9,10) einen Prozessor aufweist.

**10.** Einrichtung nach einem der vorhergehenden Ansprüche, dadurch gekennzeichnet, daß der geldwerte Gegenstand eine Banknote ist.

**11.** Einrichtung nach einem der vorhergehenden Ansprüche, dadurch gekennzeichnet, daß der geldwerte Gegenstand eine Münze ist.

**12.** Einrichtung nach einem der vorhergehenden Ansprüche, dadurch gekennzeichnet, daß das Aufnahmesystem (1) zur Erfassung magnetischer Merkmale des geldwerten Gegenstands ausgebildet ist.

**13.** Einrichtung nach einem der vorhergehenden Ansprüche, dadurch gekennzeichnet, daß das Aufnahmesystem (1) zur Erfassung von elektromagnetischer Strahlung, die vom geldwerten Gegenstand reflektiert wird, ausgebildet ist.

**14.** Einrichtung nach einem der vorhergehenden Ansprüche, dadurch gekennzeichnet, daß das Aufnahmesystem (1) zur Erfassung akustischer Merkmale des geldwerten Gegenstands ausgebildet ist.

**Claims**

**1.** An apparatus with a pick-up system (1) and a classifying system (4) for classifying a pattern of a money article, using the values of a series of physical features as delivered by the pick-up system (1), wherein the classifying system (4) is coupled with the pick-up system (1) via an input (5) receiving said features, and is coupled via an output (6) with a service system (7),
**characterised in**

that there are provided a plurality of classifiers (8) in the classifying system (4) which each distinguish the pattern between two possible classes and each indicate the distinction by means of an output signal, which can have one of two output forms, each associated with one of said classes,
that each of the classifiers (8) classifies on the basis of an own feature vector, the components of which are selected from the series of features of the pattern, and
that the classification system (4) comprises evaluation means (9, 10) producing from the output signals decision data which indicate the class to which the pattern belongs.

**2.** The apparatus of claim 1, **characterised in** that each of the classifiers (8) multiplies each component of its feature vector with a predetermined weighting factor associated with that feature and adds together the obtained products to form a separation quantity the value of which is used for making said distinction and generating said output signal.

**3.** An apparatus according to claim 2, **characterised in** that each of the classifiers (8) comprises a feature input (11) consisting of multiple lines and a classifying output (12) for an output signal,

that the feature inputs (11) of the classifiers (8) are connected with said input (5),
that the evaluation means comprises evaluation units (9) having inputs which are coupled directly or via a blocking unit (10) with classifying outputs (12), and
that the output (6) of the evaluation means is coupled to outputs of combining elements (9).

4. An apparatus according to claim 1, **characterised in** that the output signal of the classifiers (8) is binary.

5. An apparatus according to claim 1, **characterised in** that each of the classifiers (8) comprises a summing element (13), a threshold element (14) connected behind the summing element (13), and a plurality of multiplying elements (15) which are each connected at their output sides with an input of the summing element (13) and at their input sides with a line of the feature input (11), wherein the threshold element (14) is arranged at the classifying output (12).

6. An apparatus according to claim 3, **characterised in** that the evaluation units (9) are binary AND-gates and the blocking units (10) are binary inverters.

7. An apparatus according to claim 2, **characterised in** that the feature vector is selected for each classifier (8), and the weighting factor is calculated for each feature of the feature vector on the basis of measurement values from a representative number of patterns of each class, so as to maximise the difference ($a_x$) between the two mean values of the separation quantities for both classes to be distinguished by the classifier (8) and to minimise the deviations of the separation quantities for each of said two classes.

8. An apparatus according to claim 4, **characterised in** that the evaluation means comprises logic gates (9, 10) for performing Boolean functions.

9. An apparatus according to claim 1, **characterised in** that the evaluation means (9, 10) comprises a processor.

10. An apparatus according to any of the preceding claims, **characterised in** that the money article is a bank note.

11. An apparatus according to any of the preceding claims, **characterised in** that the money article is a coin.

12. An apparatus according to any of the preceding claims, **characterised in** that the pick-up system (1) is arranged to detect magnetic features of the money article.

13. An apparatus according to any of the preceding claims, **characterised in** that the pick-up system (1) is arranged to detect electromagnetic radiation reflected by the money article.

14. An apparatus according to any of the preceding claims, **characterised in** that the pick-up system (1) is arranged to detect acoustic features of the money article.

**Revendications**

1. Dispositif comportant un système de réception (1) et un système de classement (4) pour classer un modèle d'un objet ayant une valeur monétaire, sur la base des valeurs d'une série de caractéristiques physiques, qui sont délivrées par le système de réception (1), le système de classement (4) étant relié, par l'intermédiaire d'une entrée (5) qui reçoit les caractéristiques, au système de réception (1) et, par l'intermédiaire d'une sortie (6), à un système de prestation de service (7), caractérisé en ce

que dans le système de classement (4) sont prévus plusieurs dispositifs de classement (8), qui délimitent le modèle comme étant situé respectivement entre deux classes possibles et qui représentent la délimitation respectivement au moyen d'un signal de sortie qui peut prendre l'une de deux formes de sortie, qui sont associées respectivement à l'une des classes;
que chacun des dispositifs de classement (8) effectue un classement en fonction d'un vecteur caractéristique propre, dont les composantes sont recherchées dans une série des caractéristiques du modèle; et
que le système de classement (4) contient un dispositif d'exploitation (9,10), qui produit, à partir des signaux

EP 0 553 402 B1

EP 0 553 402 B1

de sortie, des données de décision qui représentent la classe à laquelle est associé le modèle.

2. Dispositif selon la revendication 1, caractérisé en ce

que chacun des dispositifs de classement (8) multiplie chaque composante de son vecteur caractéristique par un facteur de pondération prédéterminé et associé à la caractéristique, et que les produits ainsi obtenus sont additionnés pour former une grandeur de séparation, et sur la base de la valeur de laquelle il réalise la limitation et produit le signal de sortie.

3. Dispositif selon la revendication 1, caractérisé en ce

que chacun des dispositifs de classement (8) comporte une entrée de caractéristiques (11), constituée de plusieurs lignes, et une sortie de classement (12) pour un signal de sortie,
que les entrées de caractéristiques (11) des dispositifs de classement (8) sont reliées à l'entrée (5),
que le dispositif d'exploitation comporte des circuits d'exploitation (9) comportant des entrées, qui sont reliées respectivement directement par l'intermédiaire d'un circuit de blocage (10) à des sorties de classement (12), et que la sortie (6) du dispositif d'exploitation est reliée à des sorties de circuits combinatoires (9).

4. Dispositif selon la revendication 1, caractérisé en ce
que le signal de sortie des dispositifs de classement (8) est binaire.

5. Dispositif selon la revendication 1, caractérisé en ce

que chacun des dispositifs de classement (8) comporte un élément additionneur (13), un élément à seuil (14) branché en aval de l'élément additionneur (13) ainsi que plusieurs éléments multiplicateurs (15) qui sont reliés, côté sortie, respectivement à une entrée de l'élément additionneur (13) et qui sont raccordés, côté entrée, respectivement à l'une des lignes de l'entrée de caractéristiques (11), l'élément à seuil (14) étant raccordé à la sortie de classement (12).

6. Dispositif selon la revendication 3, caractérisé en ce

que les circuits d'exploitation (9) sont des portes ET binaires et que les circuits de blocage (10) sont des inverseurs binaires.

7. Dispositif selon la revendication 2, caractérisé en ce

que le vecteur caractéristique est sélectionné, à partir de valeurs de mesure d'un nombre, fournissant une information, de modèles tirés d'une classe pour chaque dispositif de classement (8) et pour chaque caractéristique du vecteur caractéristique le facteur de pondération est calculé de telle sorte qu'on obtient la différence maximale ($a_x$) entre les deux valeurs moyennes des grandeurs de séparation pour les deux classes devant être délimitées par le dispositif de classement (8), et la dispersion minimale de la grandeur de séparation pour chacune des deux classes.

8. Dispositif selon la revendication 4, caractérisé en ce que le dispositif d'exploitation comporte des portes logiques (9,10) pour l'exécution de fonction booléennes.

9. Dispositif selon la revendication 1, caractérisé en ce que le dispositif d'exploitation (9,10) comporte un processeur.

10. Dispositif selon l'une des revendications précédentes, caractérisé en ce que l'objet ayant une valeur monétaire est un billet de banque.

11. Dispositif selon l'une des revendications précédentes, caractérisé en ce que l'objet ayant une valeur monétaire est une pièce de monnaie.

12. Dispositif selon l'une des revendications précédentes, caractérisé en ce que le système d'enregistrement (1) est agencé pour la détection de caractéristiques magnétiques de l'objet ayant une valeur monétaire.

13. Dispositif selon l'une des revendications précédentes, caractérisé en ce que le système d'enregistrement (1) est agencé pour la détection d'un rayonnement électromagnétique, qui est réfléchi par l'objet ayant une valeur monétaire.

14. Dispositif selon l'une des revendications précédentes, caractérisé en ce que le système d'enregistrement (1) est agencé de manière à détecter des caractéristiques acoustiques de l'objet ayant une valeur monétaire.

EP 0 553 402 B1

# Fig. 1

# Fig. 2

Fig. 3

Fig. 5

Fig. 4